# EUROPEAN PATENT APPLICATION

(11) **EP 4 768 317 A1**
(43) Date of publication of application: **01.07.2026**
(21) Application number: 25218610.1
(22) Date of filing: 26.11.2025
(51) Int. Cl.: B60L 53/30, B60L 53/66, B60L 53/68

(54) **VEHICLE CONTROL SYSTEM, METHOD FOR CONTROLLING VEHICLE CONTROL SYSTEM, AND VEHICLE CONTROL PROGRAM**

(30) Priority: 24.12.2024 JP 2024227072
(71) Applicant: Toyota Jidosha Kabushiki Kaisha, Toyota-shi, Aichi-ken 471-8571 (JP)
(72) Inventor: KATO, Yusuke, Toyota-shi, 471-8571 (JP)
(74) Representative: J A Kemp LLP

(57) **Abstract**

A vehicle control system can charge an in-vehicle drive battery from an external charging facility. The vehicle control system includes a recognition unit configured to recognize a first situation related to power reception from the external charging facility and a second situation related to a connection between the external charging facility and a vehicle for the power reception and an information control unit configured to present information to a user of the vehicle based on a recognition result of the recognition unit. When the recognition unit recognizes the second situation in which the connection has not been terminated for a period of time equal to or greater than a predetermined notification time threshold value in a state in which the recognition unit has recognized the first situation in which the power reception has been completed, the information control unit presents notification information related to at least one of the first situation and the second situation to the user via an information presentation unit provided in the vehicle or a mobile terminal of the user.

## Description

### TECHNICAL FIELD

The present disclosure relates to a vehicle control system, a method for controlling a vehicle control system, and a recording medium.

### BACKGROUND

In the related art, a charger billing system is known which includes a connector holder holding a charging connector of a charger electrically connected to a vehicle-side power receiving means and a server that is connected to the connector holder via a wireless line or the like and performs a charging billing process and the like (for example, Japanese Unexamined Patent Publication No. 2021-083205).

In the above-described related art, when a predetermined period of time has elapsed while the connector holder and the charging connector remain unfitted, the server performs a billing process and a fee addition process based on the charging usage time. In addition, the server performs a process of notifying the connector holder of a fee surcharge status. However, billing information, charging time, and the like are displayed on a display of the connector holder.

In this configuration, information is only displayed on the display of the connector holder which is a charging facility. Therefore, even though charging has been completed, the user may not notice that charging has been ended.

### SUMMARY

According to an aspect of the present disclosure, there is provided a vehicle control system capable of charging an in-vehicle drive battery for a vehicle from an external charging facility, the vehicle control system including: a recognition unit configured to recognize a first situation related to power reception from the external charging facility and a second situation related to a connection between the external charging facility and the vehicle for the power reception; and an information control unit configured to present information to a user of the vehicle based on a recognition result of the recognition unit, in which, when the recognition unit recognizes the second situation in which the connection has not been terminated for a period of time equal to or greater than a predetermined notification time threshold value in a state in which the recognition unit has recognized the first situation in which the power reception has been completed, the information control unit presents notification information related to at least one of the first situation and the second situation to the user via an information presentation unit provided in the vehicle or a mobile terminal of the user.

In the vehicle control system according to the aspect of the present disclosure, when the recognition unit recognizes the second situation in which the connection has not been terminated for the period of time equal to or greater than the predetermined notification time threshold value in a state in which the recognition unit has recognized the first situation in which the power reception has been completed, the information control unit presents the notification information related to at least one of the first situation and the second situation to the user. Here, the notification information is presented to the user via the information presentation unit provided in the vehicle or the mobile terminal of the user. Therefore, for example, the user can more easily recognize the notification information as compared to a case where the notification information is presented only to the charging facility.

In one example, the vehicle control system may further include a determination unit configured to determine whether or not the user is present in the vehicle. When the determination unit determines that the user continues to remain in the vehicle for a period of time equal to or greater than a predetermined warning time threshold value after the notification information has been presented to the user, the information control unit may perform warning control to warn the user. In this case, by performing the warning control on the user present in the vehicle in addition to the presentation of the notification information, it is possible to prompt the user to move the vehicle from the charging space at an early stage.

In one example, the information control unit may stop some of control functions for the user provided in the vehicle as the warning control. In this case, by stopping some of the control functions by the warning control, for example, it is possible to prompt the user, who is using some of the control functions for the user without moving the vehicle from the charging space even though charging has been completed, to move the vehicle from the charging space at an early stage.

In one example, some of the control functions may include an infotainment function for the user. In this case, it is possible to prompt the user, who is using the infotainment function without moving the vehicle from the charging space, to move the vehicle from the charging space at an early stage.

In one example, the information control unit may simultaneously present the notification information to the user via both the information presentation unit of the vehicle and the mobile terminal of the user. In this case, for example, the user can more easily recognize the notification information as compared to an aspect in which the notification information is presented to the user via only one of the information presentation unit of the vehicle and the mobile terminal of the user.

According to another aspect of the present disclosure, there is provided a method for controlling a vehicle control system capable of charging an in-vehicle drive battery for a vehicle from an external charging facility, the method including: recognizing a first situation related to power reception from the external charging facility and a second situation related to a connection between the external charging facility and the vehicle for the power reception, using a recognition unit of the vehicle control system; and presenting information to a user of the vehicle based on a recognition result of the recognition unit, using an information control unit of the vehicle control system, in which, when the recognition unit recognizes the second situation in which the connection has not been terminated for a period of time equal to or greater than a predetermined notification time threshold value in a state in which the recognition unit has recognized the first situation in which the power reception has been completed, in the step of presenting information, notification information related to at least one of the first situation and the second situation is presented to the user via an information presentation unit provided in the vehicle or a mobile terminal of the user.

In the method for controlling a vehicle control system according to another aspect of the present disclosure, when the recognition unit recognizes the second situation in which the connection has not been terminated for the period of time equal to or greater than the predetermined notification time threshold value in a state in which the recognition unit has recognized the first situation in which the power reception has been completed, the information control unit presents the notification information related to at least one of the first situation and the second situation to the user. Here, the notification information is presented to the user via the information presentation unit provided in the vehicle or the mobile terminal of the user. Therefore, for example, the user can more easily recognize at least one of the first situation in which the power reception has been completed and the second situation in which the connection with the vehicle for power reception has not been terminated, as compared to a case where the notification information is presented only to the charging facility.

According to still another aspect of the present disclosure, there is provided a vehicle control program causing a computer to function as a vehicle control system capable of charging an in-vehicle drive battery for a vehicle from an external charging facility, the vehicle control program causing the computer to function as: a recognition unit configured to recognize a first situation related to power reception from the external charging facility and a second situation related to a connection between the external charging facility and the vehicle for the power reception; and an information control unit configured to present information to a user of the vehicle based on a recognition result of the recognition unit, in which, when the recognition unit recognizes the second situation in which the connection has not been terminated for a period of time equal to or greater than a predetermined notification time threshold value in a state in which the recognition unit has recognized the first situation in which the power reception has been completed, the information control unit presents notification information related to at least one of the first situation and the second situation to the user via an information presentation unit provided in the vehicle or a mobile terminal of the user.

In the vehicle control program according to still another aspect of the present disclosure, when the recognition unit recognizes the second situation in which the connection has not been terminated for the period of time equal to or greater than the predetermined notification time threshold value in a state in which the recognition unit has recognized the first situation in which the power reception has been completed, the information control unit presents the notification information related to at least one of the first situation and the second situation to the user. Here, the notification information is presented to the user via the information presentation unit provided in the vehicle or the mobile terminal of the user. Therefore, for example, the user can more easily recognize at least one of the first situation in which the power reception has been completed and the second situation in which the connection with the vehicle for power reception has not been terminated, as compared to a case where the notification information is presented only to the charging facility.

According to some aspects of the present disclosure, for example, the user can more easily recognize the notification information as compared to a case where the notification information is presented only to the charging facility.

### BRIEF DESCRIPTION OF THE DRAWINGS

FIG. 1 is a block diagram illustrating a vehicle control system according to an example.
FIG. 2 is a block diagram illustrating a user detector shown in FIG. 1.
FIG. 3 is a flowchart illustrating an operation example of a notification process of the vehicle control system shown in FIG. 1.
FIG. 4 is a flowchart illustrating an operation example of a warning process of the vehicle control system shown in FIG. 1.

### DETAILED DESCRIPTION

Hereinafter, examples of the present disclosure will be described with reference to the drawings. Further, in the following description, the same or equivalent elements are denoted by the same reference numerals, and a redundant description thereof will be omitted.

### [Configuration of Vehicle Control System]

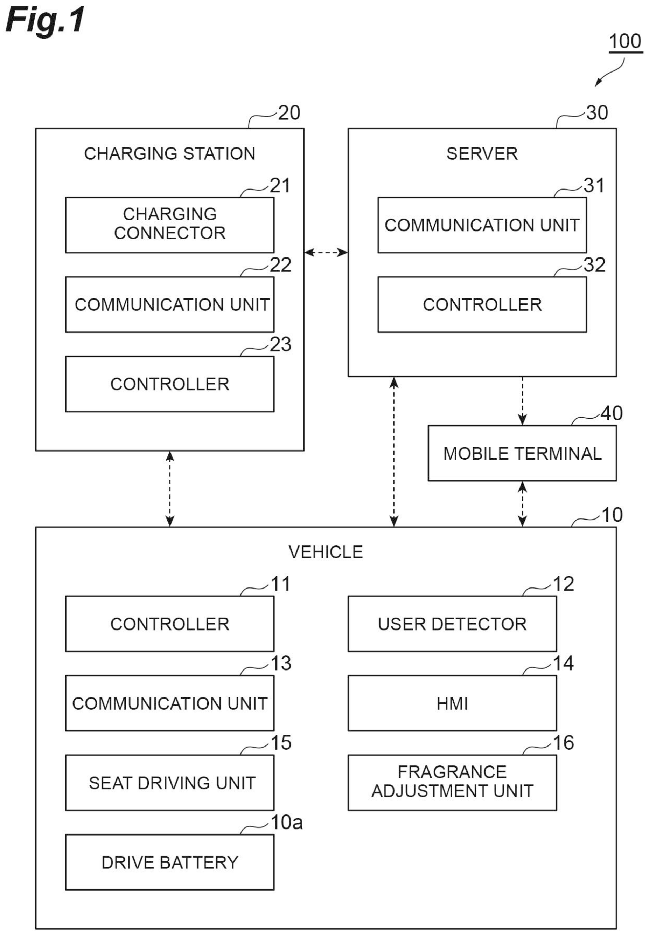

FIG. 1 is a block diagram illustrating a vehicle control system according to an example. As shown in FIG. 1, a vehicle control system 100 includes, for example, a vehicle 10, a charging station 20, a server 30, and a mobile terminal 40. The vehicle 10 is, for example, an electric vehicle or a plug-in hybrid vehicle including a drive battery 10a, a power control device, a drive motor, and the like. The vehicle 10 is configured such that the in-vehicle drive battery 10a can be charged from the charging station 20 (external charging facility). The vehicle 10 includes, for example, a controller 11 (determination unit), a user detector 12, a communication unit 13, an HMI 14 (information presentation unit), a seat driving unit 15, and a fragrance adjustment unit 16.

The controller 11 is a computer that controls communication with the charging station 20 and the server 30 and comprehensively controls a notification process and a warning process of the vehicle control system 100 executed in the vehicle 10 and processing of various service functions provided to a user in the vehicle 10, based on control signals from the charging station 20 and the server 30. The controller 11 is, for example, an electronic control unit (ECU). The ECU is an electronic control unit having a central processing unit (CPU) and storages such as a read only memory (ROM), a random access memory (RAM), and an electrically erasable programmable read-only memory (EEPROM). In the ECU, for example, the CPU executes a program stored in the storage to implement various functions. The controller 11 may be configured by a plurality of electronic units.

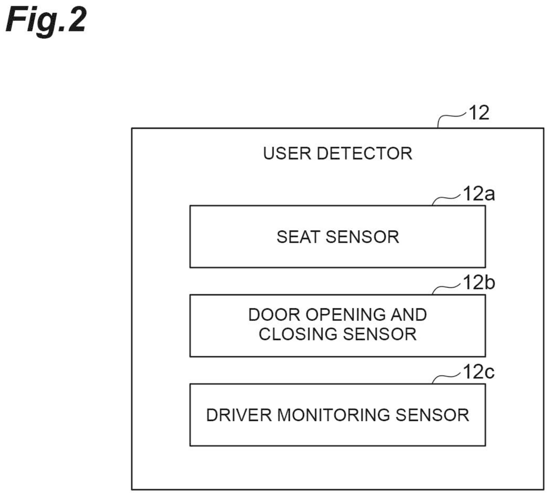

The user detector 12 is a device for detecting whether or not the user of the vehicle 10 is present in the vehicle 10. The user detector 12 includes, for example, a seat sensor 12a, a door opening and closing sensor 12b, and a driver monitoring camera 12c as shown in FIG. 2. The seat sensor 12a is, for example, a sensor that is provided in each seat of the vehicle 10 and detects the seating pressure of the user sitting in the seat. The door opening and closing sensor 12b is, for example, a switch that is provided in each door of the vehicle 10 and is pressed when the door is closed to detect whether the door is open or closed. The driver monitoring camera 12c is, for example, a camera that is provided at the front of a cabin and images a face of a user sitting in a driver's seat. Known configurations can be used as the seat sensor 12a, the door opening and closing sensor 12b, and the driver monitoring camera 12c. In addition, the user detector 12 may detect that the door is closed based on the fact that no operation to unlock the door has been performed. Instead of the driver monitoring camera 12c, an in-vehicle camera imaging a user sitting in a seat other than the driver's seat may be used. The user detector 12 transmits information of the detection results to the controller 11.

The controller 11 functions as a determination unit determining whether or not the user is present in the vehicle 10 based on the detection results of the user detector 12. When the seating pressure detected by the seat sensor 12a is equal to or greater than a predetermined pressure threshold value, the controller 11 may determine that the user is present in the vehicle 10. The pressure threshold value is a threshold value of the seating pressure for estimating that the user is sitting in the seat. The controller 11 may determine that the user is present in the vehicle 10 when the pressed state of the door opening and closing sensor 12b continues after the moving vehicle 10 has come to a stop. The controller 11 may determine that the user is present in the vehicle 10 when the image captured by the driver monitoring camera 12c includes the face of the user as a result of image processing on the captured image. The controller 11 transmits the result of determining whether or not the user is present in the vehicle 10 to the charging station 20 or the server 30.

Returning to FIG. 1, the communication unit 13 is a communication device controlling wireless communication with the outside of the vehicle 10. The communication unit 13 performs communication of various types of information with the charging station 20 and the server 30 via, for example, a communication network. The communication unit 13 is not particularly limited, and various known communication devices can be used.

The communication unit 13 may have a function of controlling wireless or wired communication with the mobile terminal 40 of the user. The mobile terminal 40 of the user means a mobile information terminal carried by the user. The mobile terminal 40 is, for example, a mobile information terminal whose contact details have been registered in advance in the server 30 such that the mobile terminal 40 can receive communications from the server 30. The mobile terminal 40 may be a smartphone terminal or a tablet terminal. The mobile terminal 40 may be a wearable terminal connected to a smartphone terminal. The communication unit 13 performs communication between the controller 11 and the mobile terminal 40 connected wirelessly or in a wired manner.

The HMI 14 is an interface for presenting information to the user in the vehicle 10 and for inputting information. The HMI 14 has a display and a speaker provided in a cabin of the vehicle 10. The HMI 14 includes, for example, a display, a speaker, and the like provided in the cabin of the vehicle 10. The HMI 14 performs image output from the display and audio output from the speaker in response to control signals from the controller 11. The display may function as a touch panel for inputting information. The display is, for example, a display of a display audio device or a navigation device. The display may be a multi-information display (MID) or a head-up display (HUD). The HMI 14 may include push-type or dial-type switches for inputting information.

The interface for inputting information is not limited to the HMI 14, and the mobile terminal 40 may be used. By connecting the mobile terminal 40 to the controller 11 of the vehicle 10 in advance wirelessly or in a wired manner, the user may perform an input operation on the mobile terminal 40 to input information to the controller 11 via the communication unit 13.

The seat driving unit 15 is provided in, for example, a reclining seat in the vehicle 10 and includes an actuator changing the angle of a backrest of the seat. The seat driving unit 15 may include actuators changing portions (for example, a lumbar support, a seat surface angle, seat surface height, and the like) other than the backrest of the seat. The seat driving unit 15 may be a vibration actuator provided in the seat. A known actuator can be used as the seat driving unit 15.

The fragrance adjustment unit 16 is a device allowing the user to perform in-vehicle aromatherapy in the cabin of the vehicle 10. The in-vehicle aromatherapy here is an in-vehicle service prepared in advance in the vehicle 10 to allow the user to enjoy an aromatherapy experience, such as relaxation, in the stationary vehicle 10. The fragrance adjustment unit 16 includes, for example, a fragrance tank storing a fragrance agent and a diffuser that receives the fragrance agent supplied from the fragrance tank and emits a fragrance component. The fragrance adjustment unit 16 may be controlled by the controller 11 to emit the fragrance component in the stationary vehicle 10 in response to the input operation of the user on the HMI 14 or the mobile terminal 40. The fragrance adjustment unit 16 may be controlled by the controller 11 to emit the fragrance component in the stationary vehicle 10 in response to the input operation of the user on the HMI 14 or the mobile terminal 40. The fragrance adjustment unit 16 may be controlled by the controller 11 to adjust the intensity and emission time of fragrance from the diffuser based on a preset program related to aromatherapy.

The controller 11 can execute control functions provided in the vehicle 10 for the user. The control functions for the user provided in the vehicle 10 are functions of increasing convenience for the user or providing a comfortable space for the user by using various devices provided in the vehicle 10. Some of the control functions for the user provided in the vehicle 10 include an infotainment function for the user. The infotainment function is a function of enabling music playback, video playback, web browsing, and the like using the HMI 14 provided in the vehicle 10. Some of the control functions for the user provided in the vehicle 10 may include a function of enabling the user to connect to a wireless LAN communication network either inside the cabin of the vehicle 10 or around the exterior of the vehicle 10. Some of the control functions for the user provided in the vehicle 10 may include a function of enabling the user to use the in-vehicle aromatherapy in the cabin of the vehicle 10. Some of the control functions for the user provided in the vehicle 10 may include a function of automatically adjusting the backrest of the seat or the like such that the user can relax in the cabin of the vehicle 10. The controller 11 executes the control functions for the user provided in the vehicle 10 in response to a touch or audio input operation by the user on the HMI 14 or the mobile terminal 40.

The charging station 20 is an external charging facility configured to charge the drive battery 10a of the vehicle 10. The charging station 20 has, for example, one or more charging parking spaces that are enclosed by boundary lines and provided with charging devices. The charging station 20 may have standby parking spaces that are not provided with the charging devices and are intended for waiting vehicles to park when there are no available charging parking spaces.

Charging services at the charging station 20 are not subject to a reservation system and are offered on a first-come, first-served basis. Therefore, when all of the charging parking spaces are occupied, the vehicle 10 waits in the standby parking space until a charging parking space become available.

The charging device of the charging station 20 is a charger installed in a so-called quick charging stand. The charging device of the charging station 20 has a charging connector 21 provided at an end of a charging cable extending from a housing, a communication unit 22 accommodated in the housing, and a controller 23 (recognition unit) accommodated in the housing. The charging device of the charging station 20 may have a power conversion device accommodated in the housing. The power conversion device includes a rectifier circuit, a transformer, a switching circuit, and the like. The power conversion device converts alternating current power supplied from an alternating current power source, such as a commercial power source, into direct current power for charging.

The charging connector 21 is a connection terminal inserted into a charging inlet of the vehicle 10. The charging connector 21 may include a positive terminal, a negative terminal, and a signal terminal. The positive terminal and the negative terminal are terminals for supplying power for charging the drive battery 10a from the power conversion device to the vehicle 10. The positive terminal and the negative terminal are connected to the power conversion device via cables. The signal terminal is a terminal for transmitting and receiving signals related to the connection between the charging connector 21 and the charging inlet of the vehicle 10. The signal terminal is connected to the controller 23 via cables. When the charging connector 21 is inserted into the charging inlet of the vehicle 10, the power conversion device is electrically connected to the charging inlet via the charging cable and the charging connector 21. As a result, the controller 11 of the vehicle 10 recognizes the connection of the charging connector 21, and the relay of the charging circuit of the vehicle 10 is closed.

The communication unit 22 is a communication device controlling wireless communication with the outside of the charging station 20. The communication unit 22 performs the communication of various types of information with the communication unit 13 of the vehicle 10 and the communication unit 31 of the server 30 via, for example, a communication network. The communication unit 22 is not particularly limited, and various known communication devices can be used.

The controller 23 is a computer that controls communication with the vehicle 10 and the server 30 and integrally controls a charging process of the vehicle control system 100 executed in the charging station 20 based on control signals from the vehicle 10 and the server 30. The controller 23 is, for example, an ECU. The controller 23 may be configured by a plurality of electronic units. While the charging connector 21 is inserted into the charging inlet of the vehicle 10, the controller 23 controls the power conversion device based on detection results of a current sensor, a voltage sensor, and the like to charge the drive battery 10a of the vehicle 10. The controller 23 transmits and receives signals to and from the controller 11 of the vehicle 10 via the signal terminal of the charging connector 21 while the charging connector 21 is inserted into the charging inlet of the vehicle 10.

The controller 23 functions as a recognition unit recognizing a first situation related to power reception from the charging station 20 to the vehicle 10 and a second situation related to the connection between the charging station 20 and the vehicle 10 for power reception.

The first situation includes a charging situation in which power is being received from the charging station 20 to the vehicle 10 and a situation in which the power reception performed in the charging situation has been completed (a first situation in which the power reception has been completed). The controller 23 recognizes the first situation based on the amount of power transmitted and received from the charging station 20 to the vehicle 10. For example, information of a charging current detected by a sensor provided in the charging device of the charging station 20, information of a charging current on the vehicle 10 side received via the signal terminal of the charging connector 21, or the like can be used as information representing the amount of power transmitted and received.

The second situation includes a connected situation in which the charging connector 21 is connected to the charging inlet of the vehicle 10 for power reception between the charging station 20 and the vehicle 10 (the second situation in which the connection has not been terminated) and a non-connected situation in which the charging connector 21 is not connected to the charging inlet of the vehicle 10. The controller 23 recognizes the second situation based on whether or not the charging connector 21 is connected to the charging inlet of the vehicle 10. For example, the controller 23 can receive information indicating that the controller 11 of the vehicle 10 recognizes the connection of the charging connector 21 via the signal terminal of the charging connector 21, and thereby recognize whether or not the charging connector 21 is connected to the charging inlet of the vehicle 10.

The server 30 is a device managing a usage status of the charging station 20, a payment status of a charging fee, and the like in cooperation with the controller 23 of the charging station 20. The server 30 may authenticate payments made using charging authentication cards in cooperation with the controller 23 of the charging station 20. The server 30 includes a communication unit 31 and a controller 32 (information control unit).

The communication unit 31 is a communication device controlling wireless communication with the outside of the server 30. The communication unit 31 performs the communication of various types of information with, for example, the communication unit 13 of the vehicle 10, the communication unit 22 of the charging station 20, the mobile terminal 40, an authentication server of a payment service operator, and the like via a communication network. The communication unit 31 is not particularly limited, and various known communication devices can be used.

The controller 32 is a computer that controls communication with the outside of the server 30 via the communication unit 31 and integrally controls various processes of the vehicle control system 100 executed in the server 30 based on control signals from the charging station 20. The controller 32 is, for example, an ECU. A storage of the controller 32 may have a database in which vehicle identification information of a plurality of vehicles including the vehicle 10 and user identification information of users are associated with each other. Examples of the vehicle identification information include the chassis number and registration number of the vehicle 10. Examples of the user identification information include the driver's license number, mobile phone number, and contact details of the user, and the user ID for the charging service.

The controller 32 functions as an information control unit presenting information to the user of the vehicle 10 based on the recognition result of the controller 23 as the recognition unit. When the controller 23 recognizes the second situation, in which the connection has not been terminated for a period of time equal to or greater than a predetermined notification time threshold value in a state in which the controller 23 has recognized the first situation in which the power reception has been completed, the controller 32 presents, to the user, notification information related to at least one of the first situation and the second situation via the HMI 14 provided in the vehicle 10 or the mobile terminal 40 of the user. The notification time threshold value is a threshold value for the elapsed time from the completion of the power reception, which is used to determine whether or not to present the notification information to the user. The notification time threshold value is not particularly limited and can be set to a predetermined period of time such as several minutes. The notification time threshold value may be set according to the number of charging parking spaces, the number of standby parking spaces, and the number of other vehicles waiting in the standby parking spaces in the charging station 20.

The notification information is information related to at least one of the first situation and the second situation. The notification information may be information related to the first situation in which the power reception has been completed and may be, for example, text information, image information, or audio information indicating that the power reception has been completed. The notification information may be information related to the second situation in which the connection has not been terminated and may be, for example, text information, image information, or audio information indicating that the charging connector 21 remains connected to the charging inlet of the vehicle 10. The notification information may be information related to the second situation in which the connection has not been terminated in the first situation in which power reception has been completed and may be, for example, text information, image information, or audio information indicating that the charging connector 21 is to be removed from the charging inlet of the vehicle 10 due to the completion of charging. The notification information may include information for prompting the user to vacate the charging parking space. The notification information may include information indicating that an excess charge has been incurred.

The excess charge means an additional charge imposed when the charging parking space is not vacated for more than a predetermined period of time even after charging has been completed. The excess charge may be determined, for example, at the timing when the charging connector 21 is removed from the charging inlet of the vehicle 10 after a predetermined period of time has elapsed since the completion of charging.

When presenting the notification information related to at least one of the first situation and the second situation to the user, the controller 32 may simultaneously present the notification information to the user via both the HMI 14 of the vehicle 10 and the mobile terminal 40 of the user. The notification information simultaneously presented to both the HMI 14 of the vehicle 10 and the mobile terminal 40 of the user may be the same information or may be different information.

When presenting the notification information related to at least one of the first situation and the second situation to the user, the controller 32 may present the notification information to the user via either the HMI 14 of the vehicle 10 or the mobile terminal 40 of the user, by simultaneously transmitting the notification information to both the HMI 14 of the vehicle 10 and the mobile terminal 40 of the user. For example, when the controller 11 determines that the user is present in the vehicle 10, the controller 32 may present the notification information to the user via the HMI 14 of the vehicle 10 by simultaneously transmitting the notification information to both the HMI 14 of the vehicle 10 and the mobile terminal 40 of the user. For example, when the controller 11 determines that the user is not present in the vehicle 10, the controller 32 may present the notification information to the user via the mobile terminal 40 of the user by simultaneously transmitting the notification information to both the HMI 14 of the vehicle 10 and the mobile terminal 40 of the user.

When the controller 11 determines that the user continues to remain in the vehicle 10 for a period of time equal to or greater than a predetermined warning time threshold value after the notification information has been presented to the user, the controller 32 may perform warning control to warn the user. The warning control is control that is additionally performed on the user who continues to remain in the charging parking space even after the notification information has been presented.

The warning time threshold value is a threshold value for the elapsed time from the presentation of the notification information to the user, which serves as a criterion for determining whether or not to perform the warning control. The warning time threshold value is not particularly limited and can be set to, for example, a predetermined period of time such as several minutes. The warning time threshold value may be set according to the number of charging parking spaces, the number of standby parking spaces, and the number of other vehicles waiting in the standby parking spaces in the charging station 20.

As the warning control, the controller 32 may additionally notify the user of information (for example, text information, image information, or audio information such as "Please vacate the charging parking space immediately") for directly prompting the user to vacate the charging parking space. When presenting the notification information related to at least one of the first situation and the second situation to the user, the controller 32 may perform the warning control by simultaneously presenting, via the HMI 14 of the vehicle 10, information for directly prompting the user to vacate the charging parking space. In this case, the warning time threshold value may be 0 minutes.

As the warning control, the controller 32 may change the control state of the control functions for the user provided in the vehicle 10 to ultimately prompt the user to vacate the charging parking space. As the warning control, the controller 32 may stop some of the control functions for the user provided in the vehicle 10. As the warning control, the controller 32 may stop the infotainment function for the user. As the warning control, the controller 32 may stop music playback, video playback, web browsing, and the like using the HMI 14 provided in the vehicle 10. As the warning control, the controller 32 may stop the wireless LAN communication to the user in the cabin of the vehicle 10 or around the exterior of the vehicle 10. As the warning control, the controller 32 may stop the function of enabling the user to use the in-vehicle aromatherapy in the cabin of the vehicle 10. As the warning control, the controller 32 may terminate the function of automatically adjusting the backrest of the seat and the like such that the user can relax in the cabin of the vehicle 10 and return the seat to a normal driving state.

### [Operation of Vehicle Control System and Method for Controlling Vehicle Control System]

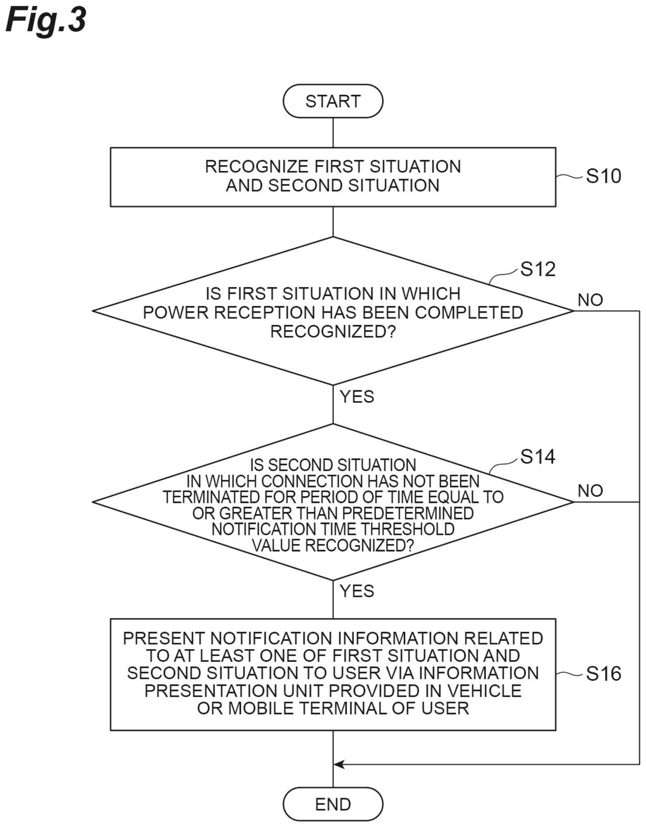

Next, the operation of the vehicle control system 100 will be described with reference to the drawings. FIG. 3 is a flowchart illustrating an operation example of a notification process of the vehicle control system shown in FIG. 1. The process shown in FIG. 3 is executed, for example, when the vehicle 10 is stopped in the charging parking space of the charging station 20 and power reception from the charging station 20 to the vehicle 10 is started.

As shown in FIG. 3, in Step S10, the controller 23 of the charging station 20 recognizes the first situation related to the power reception from the charging station 20 to the vehicle 10 and the second situation related to the connection between the charging station 20 and the vehicle 10 for power reception, using the recognition unit (recognition step). The controller 23 recognizes, as the first situation, the charging situation in which power is being received from the charging station 20 to the vehicle 10 or the situation in which the power reception in the charging situation has been completed (the first situation in which the power reception has been completed), based on the amount of power transmitted and received from the charging station 20 to the vehicle 10. The controller 23 recognizes, as the second situation, the connected situation in which the charging connector 21 is connected to the charging inlet of the vehicle 10 for power reception between the charging station 20 and the vehicle 10 (the second situation in which the connection has not been terminated) or the non-connected situation in which the charging connector 21 is not connected to the charging inlet of the vehicle 10, based on whether or not the charging connector 21 is connected to the charging inlet of the vehicle 10.

In Step S12, the controller 32 of the server 30 determines whether or not the controller 23 of the charging station 20 recognizes the first situation in which the power reception has been completed, using the information control unit (information control step).

When the controller 23 of the charging station 20 does not recognize the first situation in which the power reception has been completed (Step S12: NO), the vehicle control system 100 ends the current process shown in FIG. 3. The vehicle control system 100 may repeat the process shown in FIG. 3 at predetermined intervals.

On the other hand, when the controller 23 of the charging station 20 recognizes the first situation in which the power reception has been completed (Step S12: YES), in Step S14, the controller 32 of the server 30 determines whether or not the controller 23 of the charging station 20 recognizes the second situation, in which the connection has not been terminated for a period of time equal to or greater than a predetermined notification time threshold value, using the information control unit (information control step).

When the controller 23 of the charging station 20 does not recognize the second situation in which the connection has not been terminated for the period of time equal to or greater than the predetermined notification time threshold value (NO in Step S14), the vehicle control system 100 ends the current process shown in FIG. 3. The vehicle control system 100 may repeat the process shown in FIG. 3 at predetermined intervals.

On the other hand, when the controller 23 of the charging station 20 recognizes the second situation in which the connection has not been terminated for the period of time equal to or greater than the predetermined notification time threshold value (Step S14: YES), in Step S16, the controller 32 of the server 30 presents the notification information related to at least one of the first situation and the second situation to the user via the HMI 14 provided in the vehicle 10 or the mobile terminal 40 of the user, using the information control unit (information control step). For example, the controller 32 of the server 30 presents, to the user, text information, image information, or audio information indicating that the power reception has been completed, and text information, image information, or audio information indicating that the charging connector 21 remains connected to the charging inlet of the vehicle 10. The controller 32 of the server 30 may simultaneously present the notification information to the user via both the HMI 14 of the vehicle 10 and the mobile terminal 40 of the user. Then, the vehicle control system 100 ends the current process shown in FIG. 3. The vehicle control system 100 may repeat the process shown in FIG. 3 at predetermined intervals.

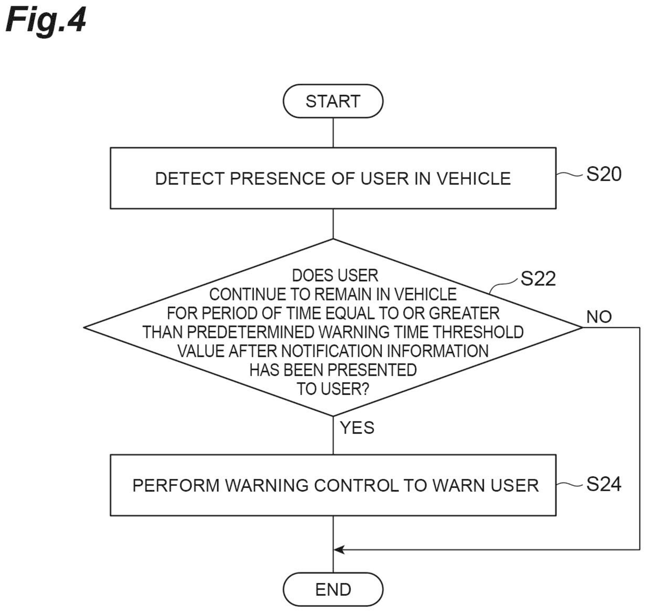

FIG. 4 is a flowchart illustrating an operation example of a warning process of the vehicle control system shown in FIG. 1. The process shown in FIG. 4 is executed, for example, when the controller 32 of the server 30 has presented the notification information related to at least one of the first situation and the second situation to the user.

As shown in FIG. 4, in Step S20, the controller 11 of the vehicle 10 detects the presence of the user in the vehicle 10, using the determination unit (detection step). For example, the controller 11 of the vehicle 10 determines whether or not the user is present in the vehicle 10 based on the detection results of the seat sensor 12a, the door opening and closing sensor 12b, and the driver monitoring camera 12c.

In Step S22, the controller 32 of the server 30 determines whether or not the user continues to remain in the vehicle 10 for a period of time equal to or greater than a predetermined warning time threshold value after the notification information has been presented to the user, based on the detection results of the controller 11 of the vehicle 10, using the information control unit (determination step).

When the controller 32 of the server 30 does not determine that the user continues to remain in the vehicle 10 for the period of time equal to or greater than the predetermined warning time threshold value after the notification information has been presented to the user (NO in Step S22), the vehicle control system 100 ends the current process shown in FIG. 4. The vehicle control system 100 may repeat the process shown in FIG. 4 at predetermined intervals while the notification information is being continuously presented to the user.

On the other hand, when the controller 32 of the server 30 determines that the user continues to remain in the vehicle 10 for the period of time equal to or greater than the predetermined warning time threshold value after the notification information has been presented to the user (Step S22: YES), in Step S24, the controller 32 of the server 30 performs warning control to warn the user, using the information control unit (warning control step). For example, as the warning control, the controller 32 of the server 30 additionally notifies the user of information (for example, text information, image information, or audio information such as "Please vacate the charging parking space immediately") for directly prompting the user to vacate the charging parking space. As the warning control, the controller 32 of the server 30 may stop some of the control functions for the user provided in the vehicle 10. Then, the vehicle control system 100 ends the current process shown in FIG. 4. The vehicle control system 100 may repeat the process shown in FIG. 4 at predetermined intervals while the notification information is being continuously presented to the user.

### [Vehicle Control Program]

A vehicle control program causes the controller 11 of the vehicle 10, the controller 23 of the charging station 20, and the controller 32 of the server 30 as computers to function (operate) as the recognition unit, the determination unit, and the information control unit described above. The vehicle control program is stored in, for example, a non-transitory computer-readable recording medium, such as a ROM or a semiconductor memory, and is provided by the recording medium. The vehicle control program may be provided via communication such as a network.

### [Operations and Effects]

According to the vehicle control system 100, the method for controlling the vehicle control system 100, and the vehicle control program described above, when the second situation in which the connection has not been terminated for the period of time equal to or greater than the predetermined notification time threshold value in a state in which the first situation in which the power reception has been completed is recognized, the notification information related to at least one of the first situation and the second situation is presented to the user. Here, the notification information is presented to the user via the HMI 14 provided in the vehicle 10 or the mobile terminal 40 of the user. Therefore, the user can more easily recognize the notification information, for example, as compared to a case where the notification information is presented only to the charging station 20.

It is determined whether or not the user is present in the vehicle 10. When it is determined that the user continues to remain in the vehicle 10 for the period of time equal to or greater than the predetermined warning time threshold value after the notification information has been presented to the user, warning control to warn the user is performed. As described above, by performing warning control on the user present in the vehicle in addition to the presentation of the notification information, it is possible to prompt the user to move the vehicle 10 from the charging space at an early stage.

As the warning control, some of the control functions for the user provided in the vehicle 10 are stopped. As described above, by stopping some of the control functions as the warning control, for example, it is possible to prompt the user, who is using some of the control functions for the user without moving the vehicle 10 from the charging space even though charging has been completed, to move the vehicle 10 from the charging space at an early stage.

Some of the control functions include the infotainment function for the user. Therefore, it is possible to prompt the user, who is using the infotainment function without moving the vehicle 10 from the charging space, to move the vehicle 10 from the charging space at an early stage.

The notification information is simultaneously presented to the user via both the HMI 14 of the vehicle 10 and the mobile terminal 40 of the user. Therefore, for example, the user can more easily recognize the notification information as compared to an aspect in which the notification information is presented to the user via only one of the HMI 14 of the vehicle 10 and the mobile terminal 40 of the user.

The example of the present disclosure has been described above. However, the present disclosure is not limited to the above-described example. The present disclosure may be implemented in various forms with various modifications and improvements based on the knowledge of those skilled in the art, including the above-described example.

In the above-described example, the warning control is performed based on the result of determining whether or not the user is present in the vehicle 10. However, the present disclosure is not limited to this example. For example, even when the user is present outside the vehicle 10, the warning control may be performed in a case where the user uses the wireless LAN communication of the vehicle 10. When the determination unit determines that the user continues to use the wireless LAN communication of the vehicle 10 for a period of time equal to or greater than the predetermined warning time threshold value after the notification information has been presented to the user, the information control unit may stop the function of the wireless LAN communication of the vehicle 10 to perform the warning control via the mobile terminal 40.

In the above-described example, as the warning control, some of the control functions for the user provided in the vehicle 10 are stopped. However, this example may be modified. For example, as the warning control, the user may be simply notified of additional information to directly prompt the user to vacate the charging parking space.

In the above-described example, the controller 23 of the charging station 20 functions as the recognition unit. However, the first situation and the second situation may be recognized by the vehicle 10, and the controller 11 of the vehicle 10 functions as the recognition unit.

In the above-described example, the controller 11 of the vehicle 10 functions as the determination unit. However, the detection results of the user detector 12 may be transmitted from the vehicle 10, and the controller 23 of the charging station 20 or the controller 32 of the server 30 may function as the determination unit.

In the above-described example, the controller 32 of the server 30 functions as the information control unit. However, the charging station 20 may function as the information control unit by transmitting the notification information or a signal for the warning control from the charging station 20 to the vehicle 10. That is, the information control unit may be provided in an external charging facility or a server controlling the external charging facility and may present information to the user of the vehicle via the information presentation unit provided in the vehicle or the mobile terminal of the user.

In the above-described example, the charging station 20 performing charging via wired connection with the vehicle 10 is given as an example of the external charging facility. However, the present disclosure is not limited to this example. The external charging facility may be, for example, a non-contact charging facility that includes a coil or the like instead of the charging connector 21 and performs charging via wireless connection with the vehicle 10.

In the above-described example, when presenting the notification information related to at least one of the first situation and the second situation to the user, the controller 32 of the server 30 simultaneously presents the notification information to the user via both the HMI 14 of the vehicle 10 and the mobile terminal 40 of the user. However, the present disclosure is not limited to this example. For example, the first situation may include a situation in which the remaining time until the expected completion time of power reception is less than a predetermined time threshold value in the charging situation in which power reception is performed from the charging station 20 to the vehicle 10 (a first situation in which the power reception is nearing completion). When the controller 23 of the charging station 20 recognizes the first situation in which the power reception is nearing completion, the controller 32 of the server 30 may present pre-completion notification information related to the first situation in which the power reception is nearing completion to the user via the mobile terminal 40 of the user provided in the vehicle 10.

Hereinafter, the configuration requirements of various aspects of the present disclosure will be described.
[1] A vehicle control system capable of charging an in-vehicle drive battery for a vehicle from an external charging facility, the vehicle control system including:
   a recognition unit configured to recognize a first situation related to power reception from the external charging facility and a second situation related to a connection between the external charging facility and a vehicle for the power reception; and
   an information control unit configured to present information to a user of the vehicle based on a recognition result of the recognition unit,
   in which, when the recognition unit recognizes the second situation in which the connection has not been terminated for a period of time equal to or greater than a predetermined notification time threshold value in a state in which the recognition unit has recognized the first situation in which the power reception has been completed, the information control unit presents notification information related to at least one of the first situation and the second situation to the user via an information presentation unit provided in the vehicle or a mobile terminal of the user.
[2] The vehicle control system according to [1], further including:
   a determination unit configured to determine whether or not the user is present in the vehicle,
   in which, when the determination unit determines that the user continues to remain in the vehicle for a period of time equal to or greater than a predetermined warning time threshold value after the notification information has been presented to the user, the information control unit performs warning control to warn the user.
[3] The vehicle control system according to [2],
   in which the information control unit stops some of control functions for the user provided in the vehicle as the warning control.
[4] The vehicle control system according to [3],
   in which some of the control functions include an infotainment function for the user.
[5] The vehicle control system according to any one of [1] to [4],
   in which the information control unit simultaneously presents the notification information to the user via both the information presentation unit of the vehicle and the mobile terminal of the user.
[6] A method for controlling a vehicle control system capable of charging an in-vehicle drive battery for a vehicle from an external charging facility, the method including:
   recognizing a first situation related to power reception from the external charging facility and a second situation related to a connection between the external charging facility and a vehicle for the power reception, using a recognition unit of the vehicle control system; and
   presenting information to a user of the vehicle based on a recognition result of the recognition unit, using an information control unit of the vehicle control system,
   in which, when the recognition unit recognizes the second situation in which the connection has not been terminated for a period of time equal to or greater than a predetermined notification time threshold value in a state in which the recognition unit has recognized the first situation in which the power reception has been completed, in the step of presenting information, notification information related to at least one of the first situation and the second situation is presented to the user via an information presentation unit provided in the vehicle or a mobile terminal of the user.
[7] A vehicle control program causing a computer to function as a vehicle control system capable of charging an in-vehicle drive battery for a vehicle from an external charging facility, the vehicle control program causing the computer to function as:
   a recognition unit configured to recognize a first situation related to power reception from the external charging facility and a second situation related to a connection between the external charging facility and a vehicle for the power reception; and
   an information control unit configured to present information to a user of the vehicle based on a recognition result of the recognition unit,
   in which, when the recognition unit recognizes the second situation in which the connection has not been terminated for a period of time equal to or greater than a predetermined notification time threshold value in a state in which the recognition unit has recognized the first situation in which the power reception has been completed, the information control unit presents notification information related to at least one of the first situation and the second situation to the user via an information presentation unit provided in the vehicle or a mobile terminal of the user.

## Claims

1. A vehicle control system (100) capable of charging an in-vehicle drive battery (10a) for a vehicle (10) from an external charging facility (20), the vehicle control system (100) comprising:
a recognition unit (23) configured to recognize a first situation related to power reception from the external charging facility (20) and a second situation related to a connection between the external charging facility (20) and the vehicle (10) for the power reception; and
an information control unit (32) configured to present information to a user of the vehicle (10) based on a recognition result of the recognition unit (23),
wherein, when the recognition unit (23) recognizes the second situation in which the connection has not been terminated for a period of time equal to or greater than a predetermined notification time threshold value in a state in which the recognition unit (23) has recognized the first situation in which the power reception has been completed, the information control unit (32) presents notification information related to at least one of the first situation and the second situation to the user via an information presentation unit (14) provided in the vehicle (10) or a mobile terminal (40) of the user.

2. The vehicle control system (100) according to claim 1, further comprising:
a determination unit (11) configured to determine whether or not the user is present in the vehicle (10),
wherein, when the determination unit (11) determines that the user continues to remain in the vehicle (10) for a period of time equal to or greater than a predetermined warning time threshold value after the notification information has been presented to the user, the information control unit (32) performs warning control to warn the user.

3. The vehicle control system (100) according to claim 2,
wherein the information control unit (32) stops some of control functions for the user provided in the vehicle (10) as the warning control.

4. The vehicle control system (100) according to claim 3,
wherein some of the control functions include an infotainment function for the user.

5. The vehicle control system (100) according to any one of claims 1 to 4,
wherein the information control unit (32) simultaneously presents the notification information to the user via both the information presentation unit (14) of the vehicle (10) and the mobile terminal (40) of the user.

6. A method for controlling a vehicle control system (100) capable of charging an in-vehicle drive battery (10a) for a vehicle (10) from an external charging facility (20), the method comprising:
recognizing a first situation related to power reception from the external charging facility (20) and a second situation related to a connection between the external charging facility (20) and the vehicle (10) for the power reception, using a recognition unit (23) of the vehicle control system (100); and
presenting information to a user of the vehicle (10) based on a recognition result of the recognition unit (23), using an information control unit (32) of the vehicle control system (100),
wherein, when the recognition unit (23) recognizes the second situation in which the connection has not been terminated for a period of time equal to or greater than a predetermined notification time threshold value in a state in which the recognition unit (23) has recognized the first situation in which the power reception has been completed, in the step of presenting information, notification information related to at least one of the first situation and the second situation is presented to the user via an information presentation unit (14) provided in the vehicle (10) or a mobile terminal (40) of the user.

7. A vehicle control program causing a computer to function as a vehicle control system (100) capable of charging an in-vehicle drive battery (10a) for a vehicle (10) from an external charging facility (20), the vehicle control program causing the computer to function as:
a recognition unit (23) configured to recognize a first situation related to power reception from the external charging facility (20) and a second situation related to a connection between the external charging facility (20) and the vehicle (10) for the power reception; and
an information control unit (32) configured to present information to a user of the vehicle (10) based on a recognition result of the recognition unit (23),
wherein, when the recognition unit (23) recognizes the second situation in which the connection has not been terminated for a period of time equal to or greater than a predetermined notification time threshold value in a state in which the recognition unit (23) has recognized the first situation in which the power reception has been completed, the information control unit (32) presents notification information related to at least one of the first situation and the second situation to the user via an information presentation unit (14) provided in the vehicle (10) or a mobile terminal (40) of the user.
